# FASCICULE DE BREVET EUROPEEN

(11) **EP 1 277 000 B1**
(45) Date de publication et mention de la délivrance du brevet: **06.09.2006**
(21) Numéro de dépôt: 02722344.5
(22) Date de dépôt: 13.03.2002
(51) Int. Cl.: F16D 69/02, B29C 45/26

(54) **PROCEDE D'OBTENTION D'UNE GARNITURE DE FRICTION D'EMBRAYAGE, GARNITURE DE FRICTION D'EMBRAYAGE OBTENUE PAR UN TEL PROCEDE ET DISQUE D'EMBRAYAGE EQUIPE D'UNE TELLE GARNITURE DE FRICTION**
VERFAHREN ZUR HERSTELLUNG EINES KUPPLUNGSREIBBELAGS , KUPPLUNGSREIBBELAG UND DAMIT AUSGERÜSTETEN KUPPLUNGSSCHEIBE
METHOD FOR OBTAINING A CLUTCH LINING, A CLUTCH LINING OBTAINED USING SAID METHOD AND A CLUTCH DISC FITTED WITH ONE SUCH FRICTION LINING

(30) Priorité: 15.03.2001 FR 0103542
(43) Date de publication de la demande: 22.01.2003
(73) Titulaire: Valeo Matériaux de Friction, 87000 Limoges (FR)
(72) Inventeur: MARCHISSEAU, Michel, F-87100 Limoges (FR); BOYER, Gérard, F-87480 Saint Priest Taurion (FR); BIOT, Christian, F-87410 Le Palais sur Vienne (FR)
(74) Mandataire: Lemaire, Marc
(86) Numéro de dépôt international: PCT/FR2002/000893
(87) Numéro de publication internationale: WO 2002/075175

(56) Documents cités:
- EP-A- 0 747 444
- FR-A- 2 158 003
- FR-A- 2 600 938
- FR-A- 2 742 503
- DATABASE WPI Section Ch, Week 199425 Derwent Publications Ltd., London, GB; Class A32, AN 1994-205679 XP002184673 & JP 06 143313 A (MEIKI CO LTD), 24 mai 1994 (1994-05-24)

## Description

L'invention se rapporte à une garniture de friction, en particulier pour disque d'embrayage.

Les garnitures de friction pour disque d'embrayage peuvent être des anneaux en matériaux de frottement ou constituées de secteurs annulaires ou plots ; elles peuvent être directement fixées sur un disque porte-garnitures ou portées par des clinquants en forme de couronnes de support annulaires elles-mêmes fixées sur le disque porte-garnitures. Le disque porte-garnitures comporte généralement une partie périphérique fractionnée en deux séries de pales radiales alternées circonférentiellement à zones de portée décalées axialement en vue d'obtenir une progressivité du serrage des garnitures de friction.

Les garnitures de friction peuvent être fixées par collage ou par rivetage.

Les garnitures pour disque d'embrayage sont usuellement fabriquées par compression d'un mélange de fibres, de résines et de charges.

Un tel procédé de fabrication par compression comporte généralement des opérations comprenant notamment la préparation du mélange, le moulage par compression, la polymérisation, la rectification et le perçage pour une fixation par rivetage. Le nombre et la diversité technique de ces opérations sont défavorables à la productivité et au flux de la production.

Le moulage par compression s'accompagne de fuites de matière en quantité significative. Par ailleurs, la qualité géométrique des garnitures de friction pour embrayage en fin de moulage par compression est insuffisante ; ce défaut est corrigé par rectification. De plus, lorsque les garnitures sont fixées par rivetage, les trous nécessaires à cette fixation sont souvent obtenus par perçage. Ces trois points faibles sont responsables de rejets de matière qui peuvent dépasser trente pour cent de la matière mise en oeuvre. Le matériau de friction rejeté est ensuite stocké dans des décharges : cela n'est pas favorable à notre environnement.

La présente invention a pour objet un procédé de fabrication ne présentant pas ces inconvénients. Selon l'invention, le procédé est un procédé par injection, consistant à injecter dans un moule un matériau de friction, caractérisé par le fait que le matériau de friction contient une résine polyester et où le matériau à injecter contient notamment des fibres inorganiques et/ou organiques et/ou métalliques de 1. à 30 mm de longueur, de la résine polyester insaturé, un catalyseur de polymérisation et plus de 0,4% en poids de démoulant.

Avantageusement, le matériau de friction contenant une résine polyester est soumis à une compression après son injection dans le moule.

Le matériau contenant du polyester présente une bonne aptitude à l'injection. Ce matériau présente des qualités de frottement qui permettent la réalisation de garnitures d'embrayage où les températures maximales en fonctionnement sont moins élevées que celles qui sont atteintes par des garnitures de frein. Le coût de ce matériau est compétitif. Le parallélisme des garnitures d'embrayage fabriquées par injection de matériau contenant du polyester conviennent bien et il n'est pas nécessaire d'avoir recours systématiquement à des opérations d'usinage. Les faites de matériau pendant le moulage par injection sont peu importantes ; quoi qu'il en soit, elles peuvent être récupérées et recyclées dans le matériau injecté. Le prix de revient des garnitures obtenues par le procédé selon l'invention est très compétitif.

De plus, grâce à un tel matériau, les trous de fixation sont obtenus directement lors de l'opération de moulage grâce à des plots prévus dans le moule. Par ailleurs, lorsque l'opération d'injection est suivie d'une compression comme évoquée ci-dessus, la géométrie desdits trous est parfaite grâce au parfait plaquage du matériau comprimé contre les plots.

Avantageusement, la garniture est soumise, après la phase d'injection, à une opération d'ébavurage ; les bavures issues de l'opération d'ébavurage sont ensuite récupérées, broyées et ré-introduites dans le matériau contenant du polyester avant son injection dans le moule à injection.

De préférence, un insert est introduit dans le moule à injection avant l'opération d'injection.

Avantageusement, l'injection étant effectuée à travers au moins un point d'injection, celui-ci est situé au voisinage de la périphérie externe de la garniture à obtenir.

De préférence, des plots sont prévus dans le moule en vue de réaliser les trous de fixation de la garniture.

De préférence, le matériau à injecter contient en poids :
- entre 5 et 40% de résine polyester insaturé ;
- entre 0.5 et 2% de catalyseur pour résine polyester ;
- entre 0 et 30% de résines thermodurcissables (autres que les résines polyesters), telles que par exemple des résines mélamines , ou des résines phénoliques (novolaque , résol , CNSL ...) ou des résines mixtes mélamines phénoliques ;
- entre 0 et 30% de fibres organiques de 1 à 30 mm de longueur, telles que par exemple des fibres d'acryliques, des fibres de carbone, des fibres polyamides, des fibres celluloses ;
- entre 0 et 40% de fibres inorganiques de 1 à 20 mm de longueur, telles que par exemples des fibres de verre, des fibres de laine de roche, des fibres céramiques, des fibres de basalte, des fibres de silicate de calcium ;
- entre 0 et 30% de fibres métalliques telles que par exemple des fibres de cuivre, des fibres de laiton, des fibres d'acier, des fibres d'aluminium, des fibres de zinc;
- entre 0 et 15% de charges lubrifiantes telles que par exemple du graphite, du bisulfure d'antimoine, du talc;
- de 0 à 20% de poudres conductrices constituées de poudres métalliques telles que par exemples des poudres de cuivre et ses alliages ( laiton , bronze , ...), des poudres d'acier, aluminium... ou constituées de noir de carbone, de graphite;
- de 0 à 10% de charges abrasives telles que par exemple de la silice, des silicates divers ;
- de 0 à 15% de charges permettant une meilleure fluidité lors de l'injection, et/ou permettant de réduire la densité finale telles que par exemple des microsphères de verre (creuses, et/ou avec fortes porosités de surface), des microsphères céramiques, de la farine de bois;
- entre 5 et 15% de charges thermoplastiques ;
- entre 0,5 et 5% de démoulants internes.

Une formulation typique du matériau à injecter contient, en poids :
- 16% de résine polyester insaturée;
- 0,7% de catalyseur de polymérisation ;
- 28% de fibres de verre de 6mm de longueur ;
- 20% de craie;
- 10% de mica;
- 5,5% de talc ;
- 10% de kaolin ;
- 8% de charges thermoplastiques ;
- 1,8% d'agent démoulant.

L'invention a également pour objet une garniture de friction d'embrayage réalisée selon le procédé ci-dessus, où

la disposition des fibres dans au moins une section de la garniture est telle que, pour une population de plus de soixante pour cent des fibres, chaque fibre appartenant à la population précitée est orientée dans un espace défini par un cône dont l'angle au sommet est de quatre-vingt-dix degrés, l'axe est tangent au cercle centré sur l'axe de la garniture et passe par l'intersection de la fibre considérée avec la partie de section analysée et le sommet est situé à l'intersection de la fibre considérée avec la partie de section analysée.

Pour mieux faire comprendre l'objet de l'invention, on va en décrire maintenant, à titre d'exemple, purement illustratif et non limitatif, des modes de réalisation représentés sur les dessins annexés.

Sur ces dessins :
- la figure 1 montre une vue en coupe axiale d'une garniture annulaire selon l'invention ;
- la figure 2 est une vue partielle selon la flèche II de la figure 1 ;
- la figure 3 est une vue partielle schématique en plan d'une garniture annulaire obtenue par le procédé selon l'invention ;
- la figure 4 est une photographie montrant à grande échelle une vue en coupe transversale d'une garniture selon l'invention ;
- la figure 5 est une vue schématique en coupe montrant la matrice d'un moule à injection suivie d'une compression.

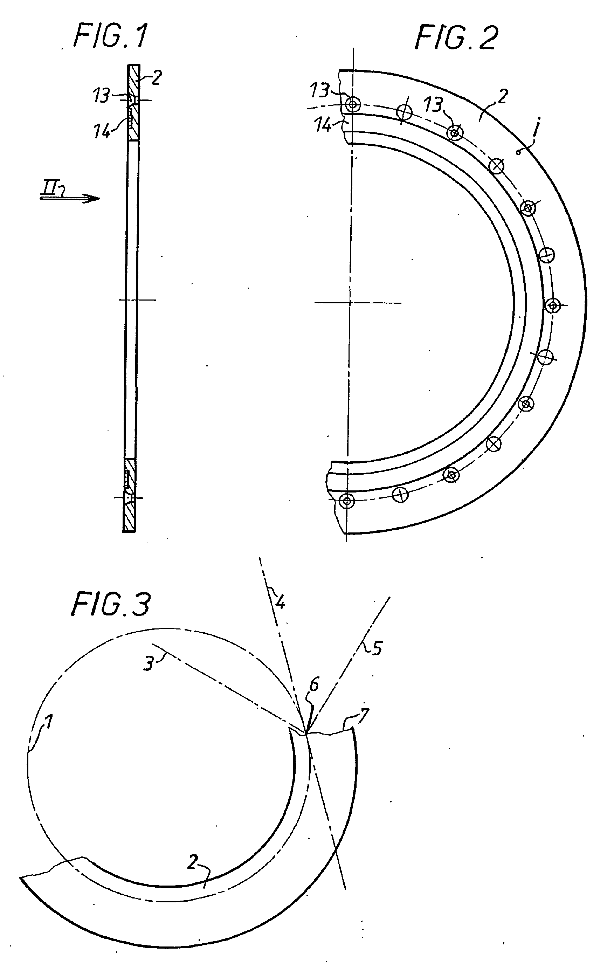

Les figures 1 et 2 montrent une garniture de forme annulaire, comprenant de la résine polyester, des fibres et des charges, obtenue par le procédé selon l'invention, c'est-à-dire par injection.

Cette garniture comprend :
- 16% de résine polyester insaturée;
- 0,7% de catalyseur de polymérisation;
- 28% de fibres de verre de 6mm de longueur ;
- 20% de craie ;
- 10% de mica;
- 5,5% de talc ;
- 10% de kaolin ;
- 8% de charges thermoplastiques ;
- 1,8% d'agent démoulant.

Cette matière a été injectée dans un moule annulaire à partir d'un point d'injection avantageusement placé au voisinage de la périphérie circulaire externe.

Les figures 1 et 2 montrent une garniture annulaire obtenue par le procédé selon l'invention.

A partir de cette entrée d'injection, la matière s'écoule globalement annulairement pour constituer un anneau de garniture. De la sorte, la disposition des fibres de verre, telle la fibre 6 de la figure 3, au sein de la garniture est très favorable pour une bonne tenue de celle-ci en centrifugation ; cette disposition peut être définie comme suit en référence à la figure 3.

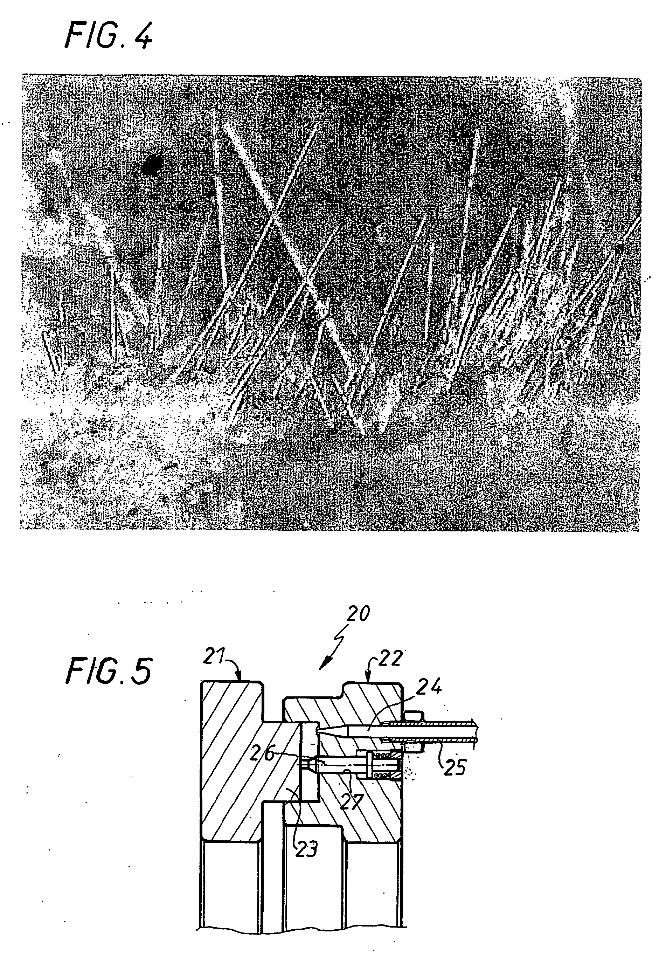

La disposition de la fibre 6 au droit de la section 7 de la garniture d'embrayage 2 est orientée à l'intérieur du cône défini par ses génératrices 3 et 5 d'intersection avec le plan de la figure. L'angle au sommet de ce cône mesure quatre-vingt-dix degrés. L'axe 4 de ce cône est tangent au cercle 1 centré sur l'axe de la garniture d'embrayage 2 passant par l'intersection de la fibre 6 avec la section 7. Le sommet de ce cône est situé à cette intersection et l'axe 4 du cône est tangent au cercle 1. Plus de soixante pour cent des fibres ont une telle disposition ; la figure 4 illustre bien cette disposition.

Bien entendu, le point d'injection est un point singulier ; ce point est par exemple le point I de la figure 2 ; comme dit ci-dessus, la matière s'écoule globalement annulairement au cours de l'opération d'injection ; toutefois, au point d'injection, la matière entre dans toutes les directions et là, la disposition des fibres est telle que celles-ci rayonnent autour du point I ; ceci n'est pas très favorable du point de vue de la tenue en centrifugation car bon nombre d'entre elles ont une direction globalement radiale ou sont inclinées de moins de quatre vingt dix degrés sur le rayon du disque passant par I ; il est dès lors préférable, comme cela est représenté figure 2, que ce point I se situe au voisinage de la périphérie externe de la garniture pour que, en cas de centrifugation, seule une petite parcelle de garniture se détache.

La garniture d'embrayage 2 représentée sur les figures 1 et 2 comporte un insert 14 ; celui-ci peut être métallique ou constitué de matériau composite, comme décrit par exemple dans le document FR-A-2 760 503. Cette garniture d'embrayage 2 présente des trous de fixation 13. L'insert 14 affleure la face de fixation de la garniture 2. Il est situé à l'intérieur du diamètre où sont situés les trous de fixation 13.

Selon une variante, le matériau de friction contenant une résine polyester est soumis à une compression après son injection dans le moule ; la figure 5 montre en coupe partielle un exemple de matrice de moule à injection adaptée à soumettre le matériau injecté à une compression ; les plateaux 21 et 22 de la matrice 20 sont munis, l'un d'un piston annulaire 23 adapté à coopérer avec une chambre annulaire de l'autre plateau, lesquels plateaux sont déplaçables axialement l'un par rapport à l'autre ; dans la chambre annulaire, débouche un canal d'injection 24 alimenté en matériau par une canalisation 25.

Sur cette figure 5, on voit également des plots 26, ici portés par le plateau 22, permettant d'obtenir, de moulage, des trous dans la garniture pour sa fixation : les plots 26 sont adaptés à coulisser dans des logements 27 complémentaires, prévus dans le plateau 22, lors de la phase de compression.

## Revendications

1. Procédé d'obtention d'une garniture de friction d'embrayage par injection, consistant à injecter dans un moule un matériau de friction, **caractérisé par le fait que** le matériau de friction contient une résine polyester, et où le matériau à injecter contient des fibres inorganiques, et/ou organiques, et/ou métalliques de 1 à 30 mm de longueur, de la résine polyester insaturé, un catalyseur de polymérisation et plus de 0,4% en poids de démoulant.

2. Procédé selon la revendication 1, **caractérisé par le fait que** le matériau de friction contenant une résine polyester est soumis à une compression après son injection dans lé moule.

3. Procédé selon la revendication 1 ou 2, **caractérisé par le fait que** la garniture est soumise, après la phase d'injection, à une opération d'ébavurage.

4. Procédé selon la revendication 3, **caractérisé par le fait que** les bavures issues de l'opération d'ébavurage sont récupérées, broyées et ré-introduites dans le matériau contenant du polyester avant son injection dans le moule à injection.

5. Procédé selon l'une des revendications 1 à 4, **caractérisé par le fait qu'**un insert est introduit dans le moule à injection avant l'opération d'injection.

6. Procédé selon l'une des revendications 1 à 5, dans lequel l'injection est effectuée au travers d'au moins un point d'injection, **caractérisé par le fait que** le point d'injection est situé au voisinage de la périphérie externe de la garniture à obtenir.

7. Procédé selon l'une des revendications 1 à 6, **caractérisé par le fait que** des plots sont prévus dans le moule en vue de réaliser les trous de fixation de la garniture.

8. Procédé selon l'une des revendications 1 à 7, **caractérisé par le fait que** le matériau à injecter contient en poids :
- entre 5 et 40% de résine polyester insaturé ;
- entre 0.5 et 2% de catalyseur pour résine polyester ;
- entre 0 et 30% de résines thermodurcissables (autres que les résines polyesters), telles sur des résines mélamines, ou des résines phénoliques
- (novolaque, résol, CNSL ...) ou des résines mixtes mélamines phénoliques ;
- entre 0 et 30% de fibres organiques de 1 à 20 mm telles que des fibres d'acryliques, des fibres de carbone, des fibres polyamides, des fibres celluloses ;
- entre 0 et 40% de fibres inorganiques de 1 à 20 mm, telles que fibres de verre, des fibres de laine de roche, des fibres céramiques, des fibres de basalte, des fibres de silicate de calcium ;
- entre 0 et 30% de fibres métalliques telles que des fibres de cuivre, des fibres de laiton, des fibres d'acier, des fibres d'aluminium, des fibres de zinc ...
- entre 0 et 15% de charges lubrifiantes telles que du graphite, du trisulfure d'antimoine, du talc ;
- de 0 à 20% de poudres conductrices constituées de poudres métalliques telles que des poudres de cuivre et ses alliages (laiton, bronze, ...), des poudres d'acier, aluminium... ou constituées de noir de carbone, de graphite...
- de 0 à 10% de charges abrasives telles que de la silice, des silicates divers ;
- de 0 à 15% de charges permettant une meilleure fluidité lors de l'injection, et/ou permettant de réduire la densité finale telles que des microsphères de verres (creuses, et/ou avec fortes porosités de surface) , des microsphères céramiques , de la farine de bois ;
- entre 5 et 15% de charges thermoplastiques;
- entre 0,5 et 5% de démoulants internes.

9. Procédé selon la revendication 8, **caractérisé par le fait que** le matériau à injecter contient en poids :
- 16% de résine polyester insaturée ;
- 0,7% de catalyseur de polymérisation;
- 28% de fibres de verre de 6mm de longueur ;
- 20% de craie;
- 10% de mica;
- 5,5% de talc ;
- 10% de kaolin ;
- 8% de charges thermoplastiques ;
1.8% d'agent démoulant.

10. Garniture de friction obtenue par le procédé selon la revendication 6 ou bien selon l'une des revendications 7, 8 ou 9 rattachées à la revendication 6, **caractérisée par le fait que** la disposition des fibres dans au moins une section (7) de la garniture (2) est telle que pour une population de plus de soixante pour cent des fibres (6), chaque fibre (6) appartenant à la population précitée est orientée dans un espace défini par un cône dont les caractéristiques sont les suivantes : l'angle au sommet mesure quatre-vingt-dix degrés, l'axe de symétrie (4) est tangent au cercle (1) centré sur la garniture d'embrayage (2) et passant par l'intersection de la fibre considérée (6) avec la partie de la section analysée (7), le sommet est situé à l'intersection de la fibre considérée (6) avec la partie de la section analysée (7).

## Claims

1. Method for obtaining a clutch friction lining by injection, consisting of injecting a friction material into a mould, **characterised in that** the friction material contains a polyester resin and where the material to be injected contains inorganic and/or organic and/or metallic fibres, 1 to 30 mm in length, unsaturated polyester resin, a polymerisation catalyst and more than 0.4% by weight of a mould release agent.

2. Method according to claim 1 **characterised in that** the friction material containing a polyester resin is subjected to compression after being injected into the mould.

3. Method according to claim 1 or 2, **characterised in that** the lining is subjected, after the injection phase, to a deflashing operation.

4. Method according to claim 3, **characterised in that** the flash coming from the deflashing operation is recovered, ground and reintroduced into the material containing the polyester before it is injected into the injection mould.

5. Method according to one of claims 1 to 4, **characterised in that** an insert is introduced into the injection mould before the injection operation.

6. Method according to one of claims 1 to 5, wherein injection is carried out through at least one injection point, **characterised in that** the injection point is situated in the vicinity of the outer periphery of the lining to be obtained.

7. Method according to one of claims 1 to 6, **characterised in that** studs are provided in the mould with a view to producing holes for attaching the lining.

8. Method according to one of claims 1 to 7, **characterised in that** the material to be injected contains, by weight:
- between 5 and 40% unsaturated polyester resin;
- between 0.5 and 2% catalyst for the polyester resin;
- between 0 and 30% of thermosetting resins (other than polyester resins) such as melamine resins, or phenolic resins (novolac, resol, CNSL etc.) or mixed melamine and phenolic resins;
- between 0 and 30% of 1 to 20 mm organic fibres such as acrylic fibres, carbon fibres, polyamide fibres, cellulose fibres;
- between 0 and 40% of 1 to 20 mm inorganic fibres such as glass fibres, rockwool fibres, ceramic fibres, basalt fibres, calcium silicate fibres;
- between 0 and 30% metallic fibres such as copper fibres, brass fibres, steel fibres, aluminium fibres, zinc fibres, etc.;
- between 0 and 15% of lubricating fillers such as graphite, antimony trisulfide, talc;
- from 0 to 20% of conducting powders consisting of metallic powders such as copper powders and copper alloys (brass, bronze etc.) steel powders, aluminium powders etc. or consisting of carbon black, graphite etc.
- from 0 to 10% abrasive fillers such as silica, various silicates;
- from 0 to 15% of fillers giving better fluidity during injection, and/or enabling the final density to be reduced, such as glass microspheres (hollow and/or with high surface porosities), ceramic microspheres, wood flour;
- between 5 and 15% thermoplastic fillers;
- between 0.5 and 5% internal mould release agents.

9. Method according to claim 8, **characterised in that** the material to be injected contains by weight:
- 16% unsaturated polyester resin;
- 0.7% polymerisation catalyst;
- 28% of 6 mm long glass fibres;
- 20% chalk;
- 10% mica;
- 5.5% talc,
- 10% kaolin,
- 8% thermoplastic fillers;
- 1.8% mould release agent.

10. Friction lining obtained by the method according to claim 6 or according to one of claims 7, 8 or 9 attached to claim 6, **characterised in that** the arrangement of fibres in at least one section (7) of the lining (2) is such that, for a population of more than sixty percent of fibres (6), each fibre (6) belonging to the aforementioned population is oriented in a space defined by a cone of which the characteristics are as follows: the angle at the summit measures 90°, the axis of symmetry (4) is tangential to the circle (1) centred on the clutch lining (2) and passing through the intersection of the fibre considered (6) with the part of the section analysed (7), and the summit is situated at the intersection of the fibre considered (6) with the part of the section analysed (7).

## Patentansprüche

1. Verfahren zur Herstellung eines Kupplungsreibbelags durch Spritzgießen, darin bestehend, dass ein Reibwerkstoff in ein Formwerkzeug eingespritzt wird, **dadurch gekennzeichnet, dass** der Reibwerkstoff ein Polyesterharz enthält, und wobei der Spritzgusswerkstoff anorganische und/oder organische und/oder Metallfasern mit 1 bis 30 mm Länge, ungesättigtes Polyesterharz, einen Polymerisationskatalysator und mehr als 0,4 Gewichts-% Formtrennmittel enthält.

2. Verfahren nach Anspruch 1, **dadurch gekennzeichnet, dass** der ein Polyesterharz enthaltende Reibwerkstoff nach seiner Einspritzung in das Formwerkzeug einer Verdichtung unterzogen wird.

3. Verfahren nach Anspruch 1 oder 2, **dadurch gekennzeichnet, dass** der Reibbelag nach der Einspritzphase einem Entgratungsvorgang unterzogen wird.

4. Verfahren nach Anspruch 3, **dadurch gekennzeichnet, dass** die beim Entgratungsvorgang anfallenden Grate aufgenommen, zerkleinert und wieder in den Polyester enthaltenden Werkstoff vor seiner Einspritzung in das Spritzgusswerkzeug eingebracht werden.

5. Verfahren nach einem der Ansprüche 1 bis 4, **dadurch gekennzeichnet, dass** vor dem Einspritzvorgang ein Einsatz in das Spritzgusswerkzeug eingeführt wird.

6. Verfahren nach einem der Ansprüche 1 bis 5, bei dem das Einspritzen durch wenigstens einen Einspritzpunkt erfolgt, **dadurch gekennzeichnet, dass** sich der Einspritzpunkt in der Nähe des äußeren Umfangs des herzustellenden Reibbelags befindet.

7. Verfahren nach einem der Ansprüche 1 bis 6, **dadurch gekennzeichnet, dass** im Formwerkzeug Stifte vorgesehen sind, um die Befestigungslöcher des Reibbelags auszuführen.

8. Verfahren nach einem der Ansprüche 1 bis 7, **dadurch gekennzeichnet, dass** der Spritzgusswerkstoff gewichtsmäßig folgendes enthält:
- zwischen 5 und 40 % ungesättigtes Polyesterharz;
- zwischen 0,5 und 2 % Katalysator für Polyesterharz;
- zwischen 0 und 30 % warmaushärtende Harze (außer den Polyesterharzen), wie etwa Melaminharze oder Phenolharze (Novolak, Resol, CNSL usw.) oder Melamin-Phenol-Mischharze;
- zwischen 0 und 30 % organische Fasern von 1 bis 20 mm, wie Acrylfasern, Kohlenstofffasern, Polyamidfasern, Zellulosefasern;
- zwischen 0 und 40 % anorganische Fasern von 1 bis 20 mm, wie Glasfasern, Steinwollfasern, Keramikfasern, Basaltfasern, Kalziumsilikatfasern;
- zwischen 0 und 30 % Metallfasern, wie Kupferfasern, Messingfasern, Stahlfasern, Aluminiumfasern, Zinkfasern usw.
- zwischen 0 und 15 % Schmierzusätze, wie Grafit, Antimontrisulfid, Talk;
- 0 bis 20 % leitende Pulver, bestehend aus Metallpulvern, wie Kupferpulvern und seinen Legierungen (Messing, Bronze usw.), Stahl-, Aluminiumpulvern usw., oder bestehend aus Carbon Black, Grafit usw.
- 0 bis 10 % Schleifzusätze, wie Siliziumdioxid, verschiedene Silikate;
- 0 bis 15 % Zusätze, die ein besseres Fließvermögen beim Spritzgießen und/oder eine Verringerung der Enddichte ermöglichen, wie Glasmikrokugeln (hohl und/oder mit großen Oberflächenporositäten), Keramikmikrokugeln, Holzmehl;
- zwischen 5 und 15 % Thermoplastzusätze;
- zwischen 0,5 und 5 % innere Formtrennmittel.

9. Verfahren nach Anspruch 8, **dadurch gekennzeichnet, dass** der Spritzgusswerkstoff gewichtsmäßig folgendes enthält:
- 16 % ungesättigtes Polyesterharz;
- 0,7 % Polymerisationskatalysator;
- 28 % Glasfasern mit 6 mm Länge;
- 20 % Kreide;
- 10 % Glimmer;
- 5,5 % Talk;
- 10 % Kaolin;
- 8 % Thermoplastzusätze;
- 1,8 % Formtrennmittel.

10. Reibbelag, hergestellt durch das Verfahren nach Anspruch 6 oder nach einem der Ansprüche 7, 8 oder 9 in Verbindung mit Anspruch 6, **dadurch gekennzeichnet, dass** die Anordnung der Fasern in wenigstens einem Querschnitt (7) des Reibbelags (2) so ausfällt, dass bei einer Population von mehr als sechzig Prozent der Fasern (6) jede Faser (6), die zu der vorgenannten Population gehört, in einem Raum ausgerichtet ist, der durch einen Kegel definiert ist, dessen Eigenschaften die folgenden sind: der Spitzenwinkel misst neunzig Grad, die Symmetrieachse (4) verläuft tangential zu dem Kreis (1), der auf den Kupplungsbelag (2) zentriert ist und durch die Schnittstelle der betrachteten Faser (6) mit dem Teil des analysierten Querschnitts (7) verläuft, die Spitze befindet sich an der Schnittstelle der betrachteten Faser (6) mit dem Teil des analysierten Querschnitts (7).
